# EUROPEAN PATENT SPECIFICATION

(11) **EP 4 545 248 B1**
(45) Date of publication and mention of the grant of the patent: **18.02.2026**
(21) Application number: 23205986.5
(22) Date of filing: 26.10.2023
(51) Int. Cl.: B23Q 3/157, B23Q 3/155

(54) **TOOL CHANGING DEVICE FOR MACHINING APPARATUS**
WERKZEUGWECHSELVORRICHTUNG FÜR EINE BEARBEITUNGSMASCHINE
DISPOSITIF DE CHANGEMENT D'OUTIL POUR MACHINE D'USINAGE

(43) Date of publication of application: 30.04.2025
(73) Proprietor: Sanjet International Co., Ltd., Daya Dist. Taichung City 428 (TW)
(72) Inventor: CHANG, CHING-SAN, 428 Taichung City (TW)
(74) Representative: Cabinet Chaillot

(56) References cited:
- EP-A1- 0 642 880
- JP-A- S62 259 739
- US-A1- 2023 311 259

## Description

### BACKGROUND OF THE INVENTION

### Technical Field

The present invention relates generally to a machining center, and more particularly to a tool changing device for a machining apparatus.

### Description of Related Art

It is known that a machining center equipped with a tool magazine achieves swift tool changing via an automatic tool changing mechanism. The aforementioned automatic tool changing mechanism includes a tool changing arm constituted by a rotating shaft and an arm, wherein an end of the rotating shaft is connected to the arm. As the rotating shaft is turned, the rotating shaft drives the arm to rotate to perform tool changing. In addition, the entire tool changing arm of certain machine models must be capable of being controlled to pivot between two fixed points to adapt to various tool changing mechanisms such as tool changing of a vertical spindle head and tool changing of a horizontal spindle head.

A tool changing arm of a conventional tool changing mechanism is installed on a rotating base capable of rotating within a 90-degree range. By controlling the rotation of the rotating base, the entire tool changing arm could be moved between two fixed points respectively at 0 degrees and at 90 degrees. However, the overall weight of the tool changing arm is substantial. In order to smoothly and stably drive the rotating base to rotate, a conventional way involves using hydraulic cylinders capable of generating a significant output power as a power source. However, using hydraulic cylinders to drive the rotation of the rotating base might lead to inaccurate positioning of the rotating base, potential hydraulic oil leaks of the hydraulic cylinders, and environmental concerns regarding the disposal of hydraulic oil. Additionally, there are limitations in usage as the temperature of hydraulic oil cannot exceed a certain threshold. US 2023/311259 A1 discloses a tool changing device with a rotating base to which a tool changing arm is connected. The rotating base is connected to a rotating shaft that is part of a driving mechanism using two swing arms connected to a driving motor. Therefore, the conventional tool changing mechanism capable of moving between two the fixed points still has room for improvement.

### BRIEF SUMMARY OF THE INVENTION

In view of the above, the primary objective of the present invention is to provide a tool changing device for a machining apparatus, which could genuinely achieve accurate rotation and positioning of a rotating base.

The present invention provides the tool changing device for the machining apparatus, comprising a mechanical base that is stationary, a driving mechanism, and a tool changing arm. The driving mechanism is engaged with the mechanical base and includes a driving cam, a follower, a shaft, and the rotating base. The driving cam is controlled to rotate about a first axis, wherein a surface of the driving cam has a curved groove. The follower has a protruding portion fitting in the curved groove. When the driving cam rotates, the follower moves along the first axis. The shaft passes through the mechanical base and rotate about a second axis. A portion of the shaft located on an inner side of the mechanical base is operatively coupled with the follower in a meshing manner. A portion of the shaft located on an outer side of the mechanical base is fixed to the rotating base. The tool changing arm is connected to the rotating base and is pivotable between a first position and a second position.

With the aforementioned design, by rotating the driving cam to drive the follower to move, the moving follower drive the shaft to rotate in a meshing manner, so that the shaft, which is rotating, of the present invention could drive the tool changing arm to pivot and position between the two fixed points.

### BRIEF DESCRIPTION OF THE SEVERAL VIEWS OF THE DRAWINGS

The present invention would be best understood by referring to the following detailed description of some illustrative embodiments in conjunction with the accompanying drawings, in which
FIG. 1 is a perspective view of the tool changing device for the machining apparatus according to an embodiment of the present invention;
FIG. 2 is an exploded view of the tool changing device for the machining apparatus in FIG. 1;
FIG. 3 is a front view of the tool changing device for the machining apparatus in FIG. 1, showing that the tool changing arm is located at the first position;
FIG. 4 is an exploded view showing a part of the tool changing device for the machining apparatus in FIG. 2 being exploded;
FIG. 5 is a perspective view, showing the assembly of the part of the tool changing device for the machining apparatus in FIG. 4 seen from another perspective;
FIG. 6 is an exploded view, showing a part of the driving mechanism of the tool changing device for the machining apparatus in FIG. 2 being exploded;
FIG. 7 is a partially exploded view of the part in FIG. 6;
FIG. 8 is a schematic view of the driving mechanism of the tool changing device for the machining apparatus in FIG. 3, showing that the first abutting portion of the rotating base is in contact with the stop block;
FIG. 9 is similar to FIG. 3, showing that the tool changing arm is located at the second position;
FIG. 10 is similar to FIG. 8, showing that the second abutting portion of the rotating base is in contact with the stop block;
FIG. 11 is a partially enlarged schematic view of the structure in FIG. 8, showing a section of the angle detection module and the driving cam;
FIG. 12 is a perspective view, showing the angle detection module and the driving mechanism seen from another perspective;
FIG. 13 is an exploded view of a part of the tool changing device for the machining apparatus in FIG. 1;
FIG. 14 is a sectional schematic view, showing the assembly relationship between the driving base and the upright wall; and
FIG. 15 is a partially enlarged view of the driving mechanism of the tool changing device for the machining apparatus shown in FIG. 3.

### DETAILED DESCRIPTION OF THE INVENTION

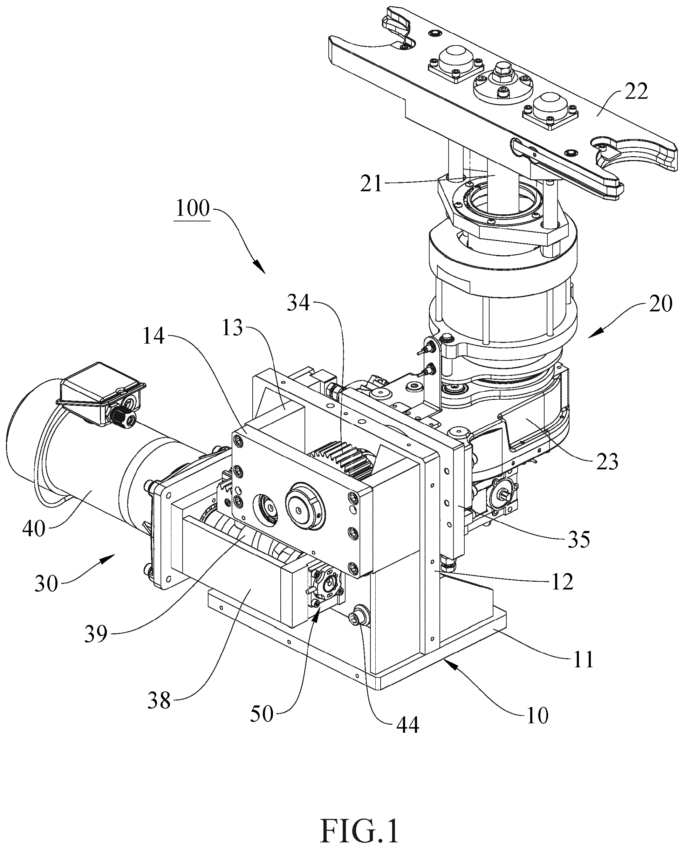

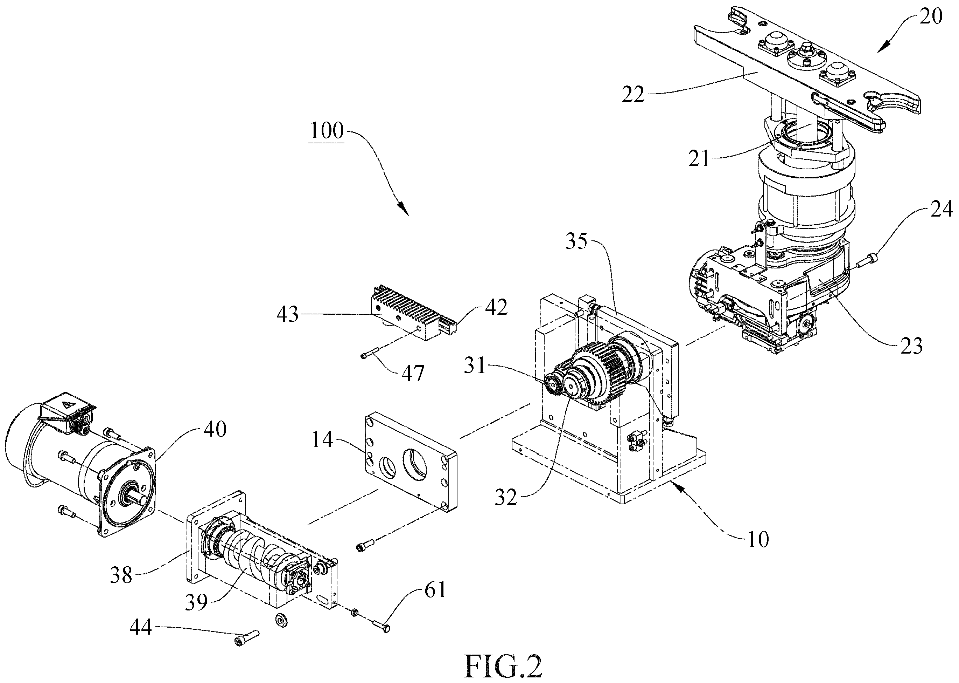

A tool changing device 100 for a machining apparatus according to an embodiment of the present invention is illustrated in FIG. 1 to FIG. 3 and is adapted to perform tool changing between tools on a shaft of the machining apparatus and tools in a tool magazine. The tool changing device 100 includes a mechanical base 10 that is stationary, a tool changing arm 20, and a driving mechanism 30. The tool changing arm 20 includes a rotating shaft 21 and an arm 22, wherein an end of the rotating shaft 21 is connected to the arm 22. The arm 22 has two opposite ends respectively adapted to clamp a tool shank (not shown). The rotating shaft 21 could be rotated to drive the arm 22 to perform a 180-degree rotational switch.

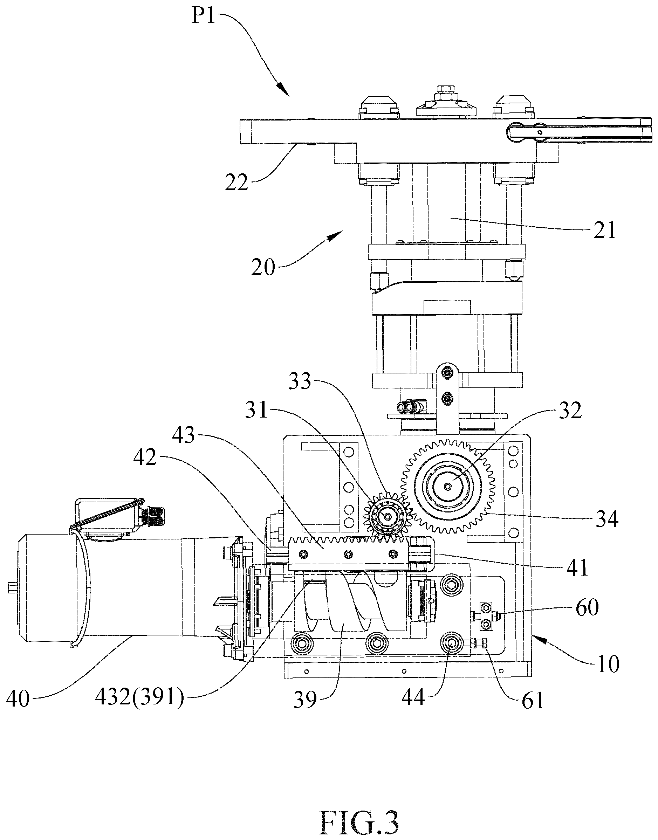

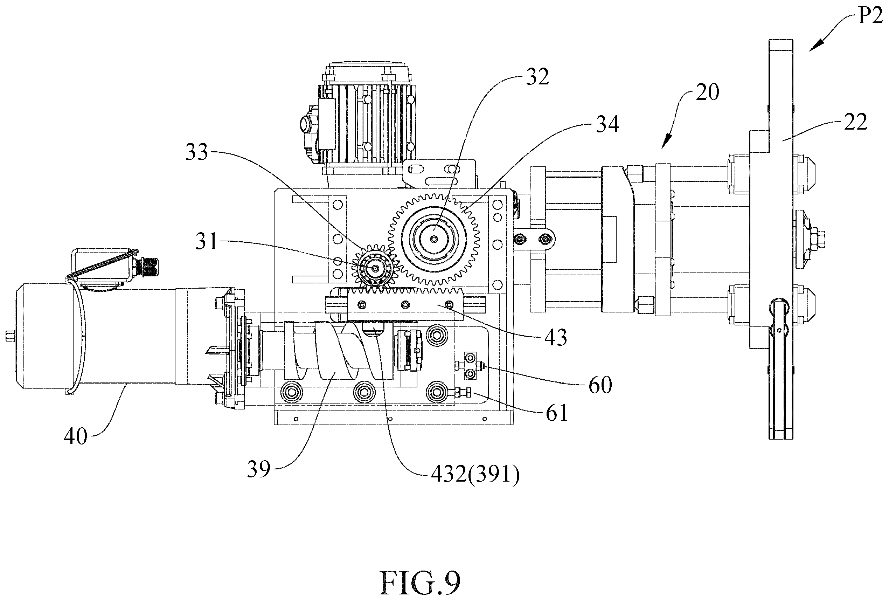

The driving mechanism 30 is combined with the mechanical base 10 and is adapted to move the tool changing arm 20 between two fixed points. In the current embodiment, the driving mechanism 30 could drive the tool changing arm 20 to perform rotation between two fixed points respectively at an angle of 0 degrees (shown in FIG. 3) and an angle of 90 degrees (shown in FIG. 9). It should be noted that the angles of the two fixed points are not limited to 0 degrees and 90 degrees but could be adjusted as per specific requirements. The following description explains the specific structure that enables the movement of the tool changing arm 20 between the two fixed points. The mechanical base 10 has a base 11 and an upright wall 12 that is vertically connected to the base 11. A side of the upright wall 12 facing the tool changing arm 20 is defined as an outer side, while another side of the upright wall 12 away from the tool changing arm 20 is defined as an inner side. A side surface of the inner side of the upright wall 12 has two flanges 13, and a front cover 14 is connected between the two flanges 13 in a detachable manner.

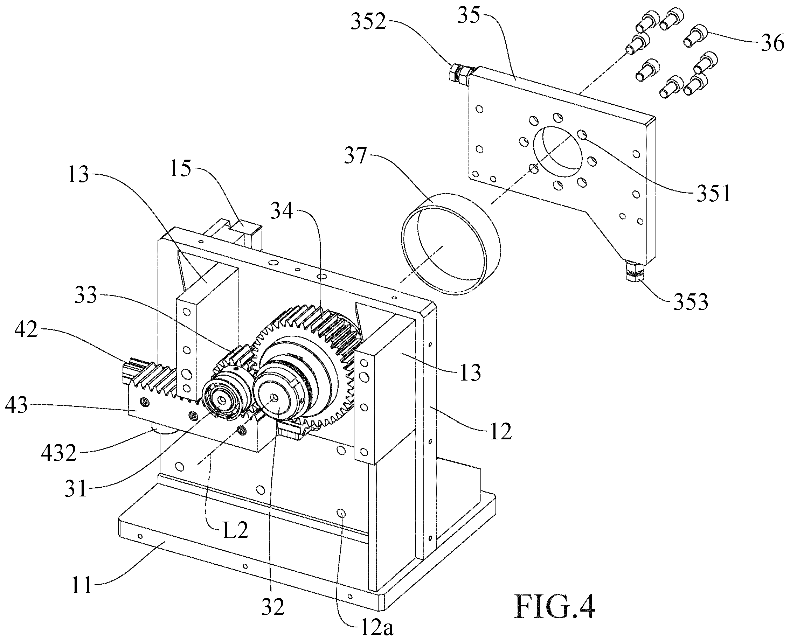

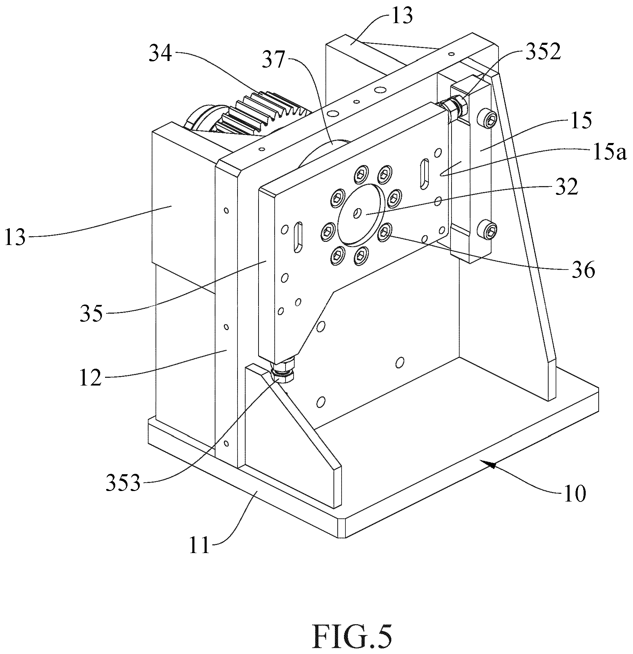

Referring to FIG 4 and FIG 5, the driving mechanism 30 includes a gear shaft 31, a shaft 32, an intermediate gear 33, a driven gear 34, and a rotating base 35. Two ends of the gear shaft 31 passes through the upright wall 12 and the front cover 14, and two ends of the shaft 32 passes through the upright wall 12 and the front cover 14. The gear shaft 31 and the shaft 32 are parallelly disposed between the two flanges 13 in a rotatable manner. The intermediate gear 33 fits around the gear shaft 31, and the driven gear 34 fits around the shaft 32. The driven gear 34 and the shaft 32 are operatively coupled with each other through a key groove matching with a key (not shown). The intermediate gear 33 meshes with the driven gear 34, wherein a tooth count of the intermediate gear 33 is smaller than a tooth count of the driven gear 34. The rotating base 35 is provided on the outer side of the upright wall 12 of the mechanical base 10 and is fixedly connected to a case 23 of the tool changing arm 20 through a plurality of bolts 24. The rotating base 35 has a plurality of through holes 351. A plurality of bolts 36 respectively passes through one of the through holes 351 to be screwed into the shaft 32 and to passes out of the upright wall 12, so that the rotating base 35 is fixedly connected to the shaft 32. When the shaft 32 rotates, the shaft 32 could drive the rotating base 35 and the tool changing arm 20 to rotate together. Additionally, a blocking tube 37 is optionally installed to fit around a portion of the rotating shaft 32 that passes out of the upright wall 12. The blocking tube 37 is located between the upright wall 12 and the rotating base 35 and is adapted to prevent dust or foreign objects in the work environment from entering between the shaft 32 and the upright wall 12, thereby ensuring the smooth rotation of the shaft 32.

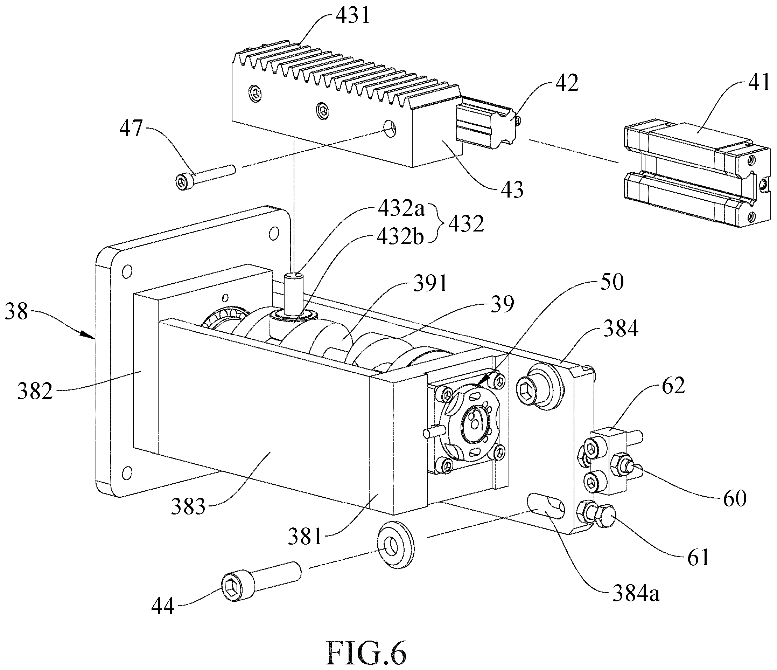

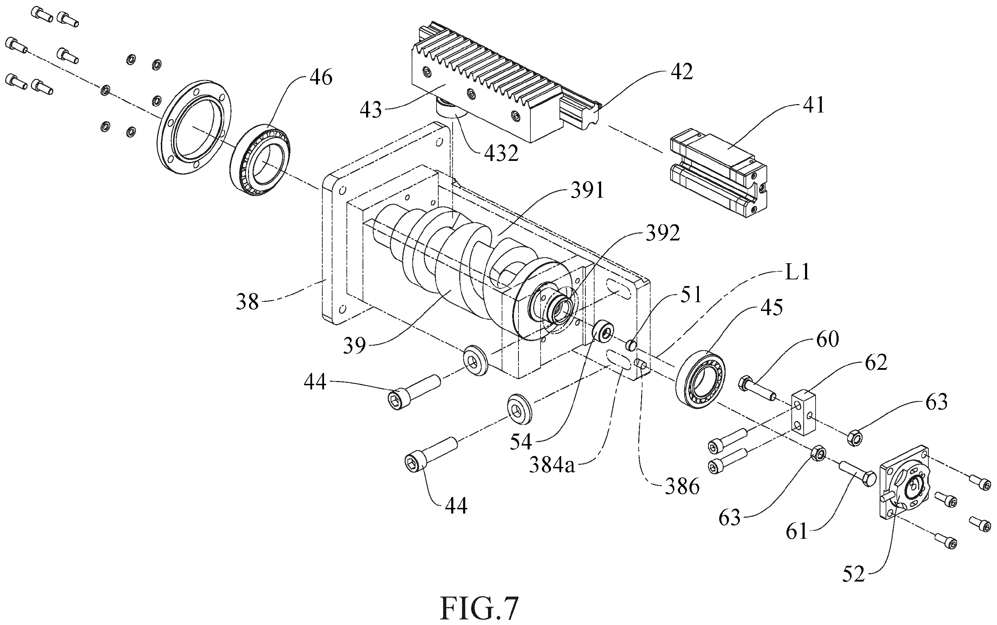

Referring to FIG 6 and FIG 7, the driving mechanism 30 also includes a driving base 38, a driving cam 39, a motor 40, a sliding block 41, a linear guide 42, and a follower 43. The driving base 38 is engaged with the upright wall 12 of the mechanical base 10 through a plurality of positioning pins 44. The driving base 38 has a right plate 381 and a left plate 382, which are spaced apart from each other by a distance. A front bearing 45 and a rear bearing 46 are respectively provided on the right plate 381 and the left plate 382. In the current embodiment, the driving cam 39, is a cylindrical cam. Two ends of the driving cam 39 respectively pass through the front bearing 45 and the rear bearing 46, so that the driving cam 39 is rotatably engaged with the driving base 38. A curved groove 391 is disposed on a surface of the driving cam 39. The motor 40 is connected to the left plate 382 of the driving base 38 and could drive the driving cam 39 to rotate about a first axis L1.

The sliding block 41, the linear guide 42, and the follower 43 are disposed between the intermediate gear 33 and the driving cam 39. The sliding block 41 is fixedly engaged with the upright wall 12. The linear guide 42 is operatively coupled with the sliding block 41 in a sliding pair manner. The follower 43 is fixedly connected to the linear guide 42 as a single unit through a plurality of screws 47. A top surface of the follower 43 has a teeth surface 431 arranged along the aforementioned first axis L1 and meshing with the intermediate gear 33. A bottom surface of the follower 43 has a protruding portion 432 fitting into the curved groove 391 of the driving cam 39. In the current embodiment, the protruding portion 432 is a bearing with a handle, including a body 432a and a head 432b. An end of the body 432a is connected to the bottom surface of the follower 43, while another end of the body 432a is connected to the head 432b. The head 432b is located within the curved groove 391. When the head 432b is designed to be rotatable, wear and tear of the head 432b due to the contact with the curved groove 391 could be reduced. When the head 432b is designed to be non-rotatable, the head 432b could form an integral structure with the body 432a, thereby enhancing the stability of the head 432b.

The structure of the tool changing device 100 according to the embodiment of the present invention is illustrated as the above. How the tool changing device 100 operates will be described as follows.

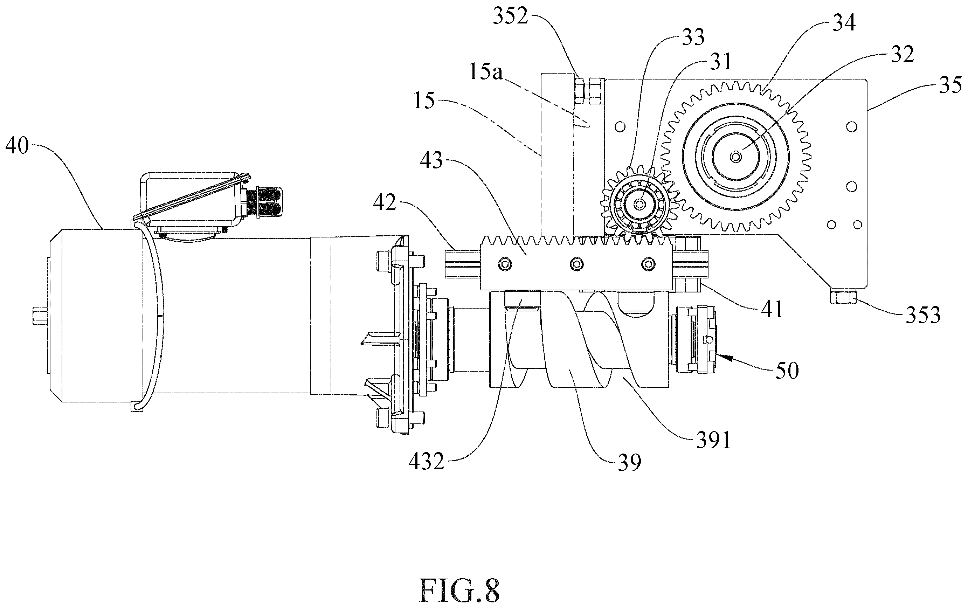

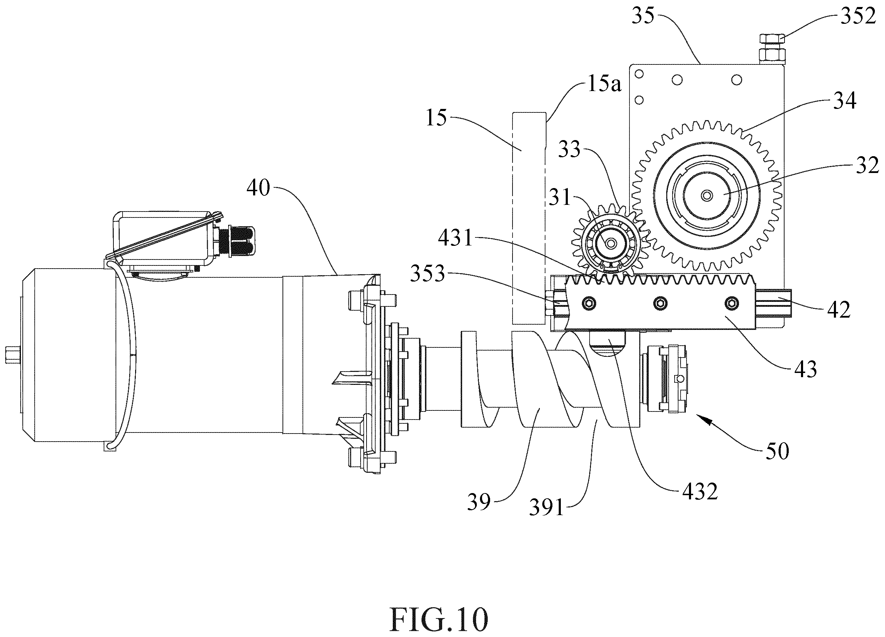

The tool changing arm 20 shown in FIG 3 and FIG 8 is in an upright state, wherein the tool changing arm 20 in the upright state is defined as being located at a first position P1. Moreover, referring to FIG 9 and FIG 10, when the motor 40 is activated to rotate the driving cam 39, the rotating driving cam 39 pushes the protruding portion 432 through the curved groove 391 of the driving cam 39. The follower 43 is constrained by the sliding pair of the sliding block 41 and the linear guide 42 to move only along the first axis L1 direction. Simultaneously, the teeth surface 431 of the follower 43 meshes with and drives the intermediate gear 33, the rotating intermediate gear 33 meshes with and drives the driven gear 34 to rotate, and the rotating driven gear 34 drives the shaft 32 to rotate about a second axis L2 (referring to FIG 4), so that the rotating base 35 and the tool changing arm 20 could be driven to synchronously rotate. When the tool changing arm 20 pivots to a horizontal state, the tool changing arm 20 in the horizontal state is defined as being located at a second position P2. Conversely, by controlling the driving cam 39 to reversely rotate, the tool changing arm 20 could be pulled back to the first position P1. It is worth noting that the travel length of the curved groove 391 of the aforementioned driving cam 39 is meticulously designed to ensure that the tool changing arm 20 could pivot securely between the first position P1 and the second position P2.

Additionally, the present invention provides an optional positioning mean adapted to precisely position the tool changing arm 20 at either the first position P1 or the second position P2. Referring to FIG 4 and FIG 5, in the current embodiment, the positioning mean includes a stop block 15, a first abutting portion 352, and a second abutting portion 353, wherein the stop block 15 is disposed on the outer side of the upright wall 12 of the mechanical base 10 and has a blocking surface 15a; the first abutting portion 352 and the second abutting portion 353 are respectively provided at two distinct points on the rotating base 35. When the first abutting portion 352 is in contact with an upper portion of the blocking surface 15a, the tool changing arm 20 is precisely positioned at the first position P1 (shown in FIG 3 and FIG 8). When the second abutting portion 353 is in contact with a lower portion of the blocking surface 15a, the tool changing arm 20 is precisely positioned at the second position P2 (shown in FIG 9 and FIG 10). In other words, based on the meticulous design of the curved groove 391 and the stop block 15, excessive deviation of the rotating base 35 could be prevented, thereby ensuring that the tool changing arm 20 is precisely positioned at either the first position P1 or the second position P2. In an application example, the first abutting portion 352 and the second abutting portion 353 could be bolts; by adjusting the depth of the bolts being screwed into the rotating base 35, the first abutting portion 352 or second abutting portion 353 could be in contact with the blocking surface 15a earlier or later, thereby achieving the effect of precisely positioning of the tool changing arm 20. It is worth mentioning that the embodiment involves providing the blocking surface 15a on the mechanical base 10 and disposing the first abutting portion 352 and the second abutting portion 353 on the rotating base 35; however, depending on practical requirements, both the first abutting portion 352 and the second abutting portion 353 could be changed to be provided on the mechanical base 10 and the blocking surface 15a could be changed to be provided on the rotating base 35.

In the above-mentioned embodiment, electric power control is employed as the power source for pivoting the tool changing arm 20. That is, by forwardly or reversely rotating the driving cam 39 by directly using the motor 40, the follower 43 is driven move along the first axis L1, so that the purpose of controlling the tool changing arm 20 to pivot between two fixed points is achieved. This improvement addresses the environmental concerns associated with the use of hydraulic cylinders in conventional tool changing mechanisms, which often involve hydraulic oil leakage and subsequent environmental issues. Additionally, the structure of the present invention is not constrained by the temperature limit of the hydraulic oil.

The above-mentioned follower 43 is operatively coupled with the driven gear 34, which fits around the shaft 32 located on the inner side of the mechanical base 10, in a meshing manner, thereby achieving the purpose of pivoting the tool changing arm 20. In the embodiment, one intermediate gear 33 is disposed between the driven gear 34 and the teeth surface 431 of the follower 43. However, it should be noted that the number of the intermediate gear 33 is not limited to one and could be increased as needed; additionally, it is not limited to directly form a teeth surface on a peripheral surface of the shaft 32 and the teeth surface of the shaft 32 directly meshes with the teeth surface 431 of the follower 43, thereby omitting the intermediate gear 33.

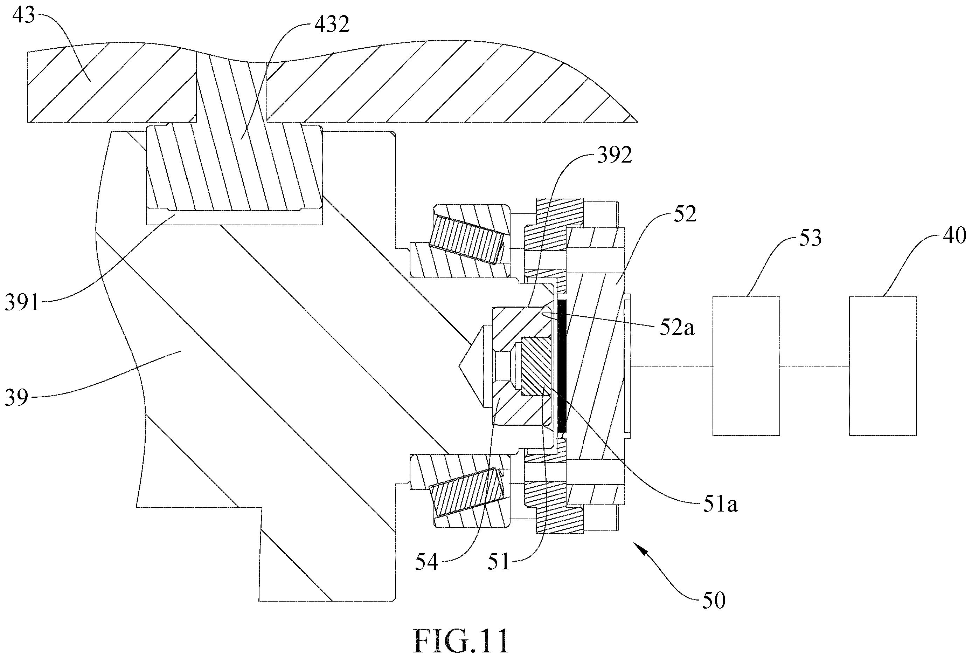

The tool changing device 100 of the present invention could further include an angle detection module 50 adapted to detect a rotational angle of the driving cam 39 to timely control the motor 40 to stop running. Referring to FIG 1 and FIG 6, the angle detection module 50 is mounted on the driving base 38 of the tool changing device 100 in the above-mentioned embodiment. As shown in FIG 7 and FIG 11, in the current embodiment, the angle detection module 50 includes a magnet 51, an angle sensor 52, and a controller 53. The magnet 51 is inserted into a fixed ring 54 located in a side hole 392 of the driving cam 39 to be located on an end surface of the driving cam 39 and could rotate along with the rotation of the driving cam 39. The angle sensor 52 is fixed on the right plate 381 of the driving base 38. The aforementioned angle sensor 52 has a sensing surface 52a that is spaced apart from a sensed surface 51a of the magnet 51 by a slight distance, wherein the slight distance is set between 1.5 mm to 3.5 mm; preferably, the slight distance is 2.5 mm, with the purpose of achieving a more precise sensing effect. The sensing surface 52a detects the rotational angle variation of the magnetic field lines of the magnet 51 in a non-contact manner. When the sensed rotational angle of the magnetic field lines (equivalent to the rotational angle of the driving cam 39) matches a predetermined value, the controller 53 receives a signal generated by the angle sensor 52 and controls the motor 40 to stop running. The predetermined value corresponds to the two fixed points of the tool changing arm 20 at the angles of 0 degrees and 90 degrees, i.e., when the tool changing arm 20 reaches the first position P1 or the second position P2, the motor 40 stops running to prevent the tool changing arm 20 from pivoting excessively.

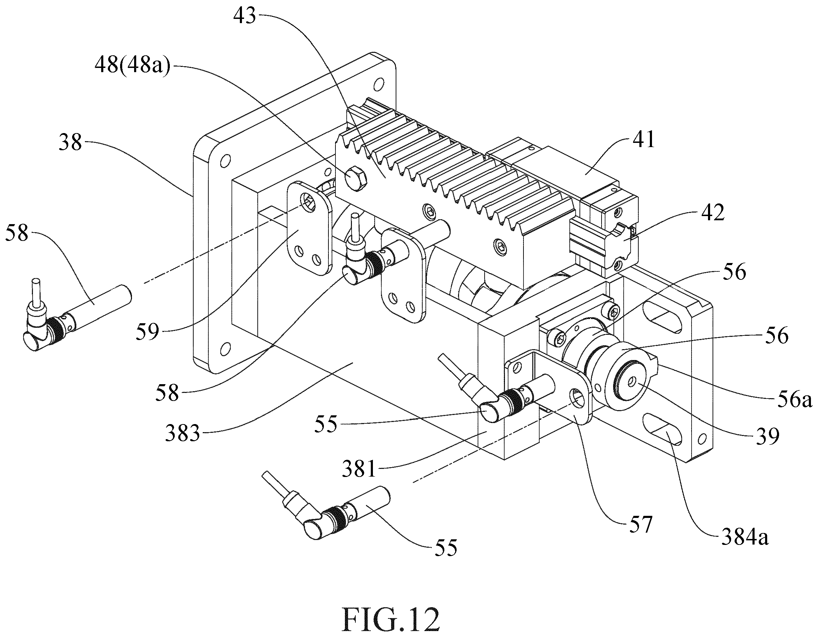

Furthermore, in another embodiment, the angle detection module could also consist of two angle detectors 55 and two sensing blocks 56. As shown in FIG 12, the two angle detectors 55 are proximity switches and are respectively connected to a fastening plate 57. The fastening plate 57 is fixedly connected to the right plate 381 of the driving base 38. The two sensing blocks 56 are signal cams and fit around an end of the driving cam 39 to rotate synchronously with the driving cam 39. Each of the two sensing blocks 56 has a sensed portion 56a that protrudes, wherein the two sensed portions 56a of the two sensing blocks 56 are arranged in a staggered arrangement. When each of the angle detectors 55 detects one of the sensed portions 56a of the sensing blocks 56 in a timely manner, each of the angle detectors 55 generates a signal corresponding to the rotational angle of the driving cam 39, wherein the signal generated by the angle detectors is also configured to control the motor 40 to stop running.

In addition, the tool changing device 100 of the present invention could further include two position sensors 58 adapted to detect a position of the follower 43. As shown in FIG 12, the two position sensors 58 and the two angle detectors 55 are jointly and electrically connected to a controller (not shown). The two position sensors 58 are spaced apart from each other and are respectively connected to a fastening plate 59. The fastening plate 59 is further fixedly connected to a front plate 383 of the driving base 38. One of the screws 47 used to fixed the follower 43 on the linear guide 42 is replaced with a screw 48 that has a head, wherein the head of the aforementioned screw 48 forms a sensed portion 48a. When the driving cam 39 rotates and one of the two angle detectors 55 sends a signal corresponding to the rotational angle, one of the two position sensors 58 detects the sensed portion 48a of the screw 48 on the follower 43 after moving and generates a confirmation signal to confirm that the follower 43 has moved to a particular position. Conversely, when one of the two angle detectors 55 sends the signal corresponding to the rotational angle of the driving cam 39 but the two position sensors 58 do not correspondingly send the confirmation signal, the follower 43 has not moved to the particular position as expected. In this case, the controller generates a warning signal as a fault reminder, allowing timely troubleshooting. The two position sensors 58 could also be used in conjunction with the angle detection module 50 which is composed of the magnet 51 and the angle sensor 52.

As mentioned above, through the cooperation relationship of the driving cam 39, the follower 43, the intermediate gear 33, and the driven gear 34, the tool changing device 100 of the present invention enables the tool changing arm 20 not only to pivot within a predetermined range but also to be precisely positioned at either the first position P1 or the second position P2. Furthermore, to effectively eliminate any backlash, the present invention further provides a fine-tuning mean that could drive the driving base 38 to move along the direction of the first axis L1. The fine-tuning mean includes at least one adjustment link and the driving base 38 being operatively coupled with the mechanical base 10 in a sliding pair manner. The driving cam 39 is engaged with the driving base 38, so that when at least one adjustment link is driven to rotate, the at least one adjustment link could drive the driving base 38 and the driving cam 39 to move synchronously.

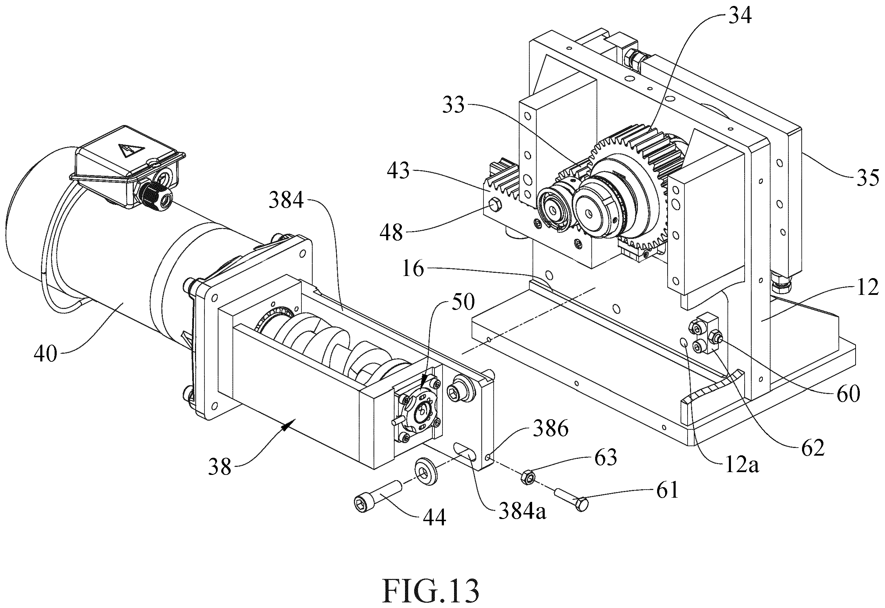

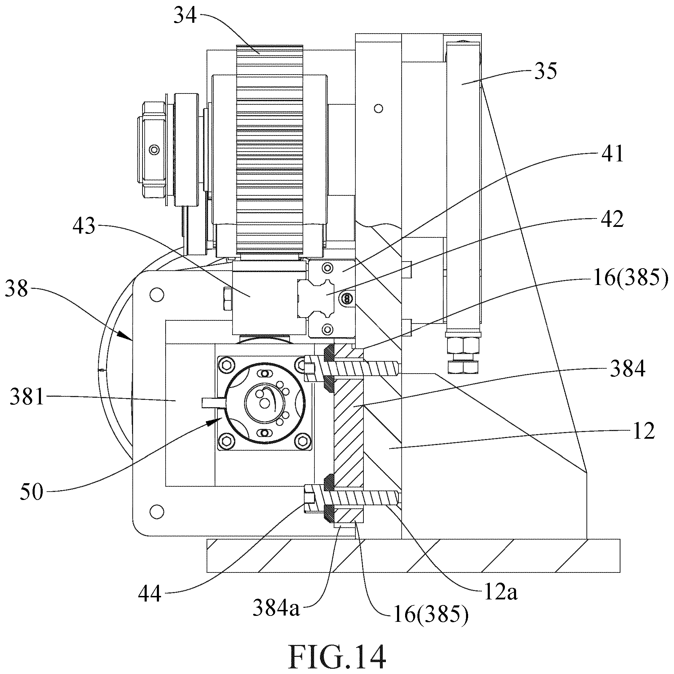

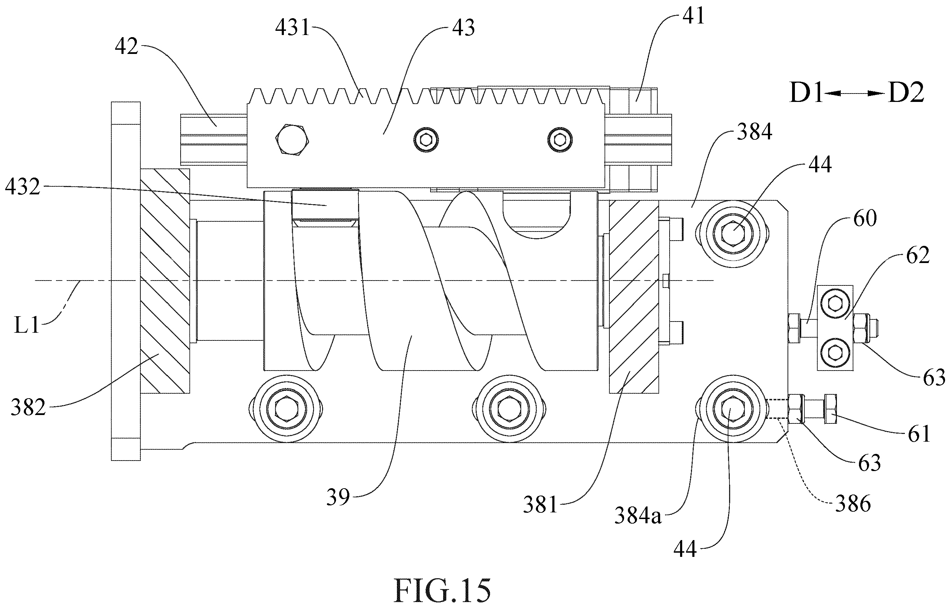

As shown in FIG 13 to FIG 15, in one embodiment aimed at achieving the aforementioned purpose, two restricting surface 16 that are parallel to each other are disposed on a surface of the inner side of the upright wall 12 of the mechanical base 10. Two shoulder portions 385 are respectively formed along an upper edge and a lower edge a rear plate 384 of the driving base 38. A plurality of positioning holes 12a is provided on the upright wall 12. The rear plate 384 has a plurality of long grooves 384a. During the installation of the driving base 38, the shoulder portions 385 are respectively aligned with the two restricting surface 16 and the positioning pins 44 respectively pass through one of the long grooves 384a and correspondingly extend into one of the positioning holes 12a, so that the driving base 38 could move within a longitudinal range of the long grooves 384a along the first axis L1. In one embodiment, the aforementioned positioning holes 12a are threaded holes, and the positioning pins 44 are bolts.

In addition, the at least one adjustment link includes a first adjustment link 60 and a second adjustment link 61, which are bolt as an example. In the current embodiment, the first adjustment link 60 and the second adjustment link 61 are disposed on the same side. The first adjustment link 60 is fixedly connected to a fastened block 62 on the upright wall 12. The fastened block 62 forms a fixed pivot point for the rotation of the first adjustment link 60, so that when the first adjustment link 60 is driven to rotate forwardly, the first adjustment link 60 pushes the driving base 38 to move in a first direction D1. The second adjustment link 61 is directly secured within a screw hole 386 of the driving base 38, wherein an end of the second adjustment link 61 abuts against a body of one of the positioning pins 44. An end of each of the positioning pins 44 extends into one of the positioning holes 12a, so that when the second adjustment link 61 is driven to rotate, the positioning pin 44 that is in contact with the second adjustment link 61 serves as a fixed pivot point. As the second adjustment link 61 continues to be screwed into the screw hole 386 of the driving base 38, the driving base 38 is pulled to move in a second direction D2 opposite to the first direction D1. At this point, the driving cam 39 is synchronously moved.

In the above description, the driving cam 39, which moves in synchronization with the driving base 38, pushes against the follower 43 to move through the protruding portion 432, thereby being beneficial for eliminating backlash and achieving the purpose of fine-tuning the pivoting of the entire tool changing arm 20. It should be noted that, in other embodiments, the first adjustment link 60 and the second adjustment link 61 could be changed to be respectively disposed on two opposite sides, i.e., respectively located on an outside of the right plate 381 and an outside of the left plate 382; furthermore, two U-shaped nut 63 could be respectively fastened to the first adjustment link 60 and the second adjustment link 61 to properly position the first adjustment link 60 and the second adjustment link 61.

## Claims

1. A tool changing device (100) for a machining apparatus, comprising:
a mechanical base (10) that is stationary;
a driving mechanism (30) engaged with the mechanical base (10) and including a driving cam (39), a follower (43), a shaft (32), and a rotating base (35); the driving cam (39) is controlled to rotate about a first axis (L1), wherein a surface of the driving cam (39) has a curved groove (391); the follower (43) has a protruding portion (432) fitting in the curved groove (391); when the driving cam (39) rotates, the follower (43) moves along the first axis (L1); the shaft (32) passes through the mechanical base (10) and is rotatable about a second axis (L2); a portion of the shaft (32) located on an inner side of the mechanical base (10) is operatively coupled with the follower (43) in a meshing manner; a portion of the shaft (32) located on an outer side of the mechanical base (10) is fixed to the rotating base (35); and
a tool changing arm (20) connected to the rotating base (35) and pivotable between a first position (P1) and a second position (P2).

2. The tool changing device (100) for the machining apparatus as claimed in claim 1, wherein the driving mechanism (30) includes a driven gear (34); the driven gear (34) fits around the shaft (32); the follower (43) has a teeth surface (431) arranged along the first axis (L1); the follower (43) is operatively coupled with the driven gear (34) through the teeth surface (431) of the follower (43) in a meshing manner; the driven gear (34) drives the shaft (32) to rotate.

3. The tool changing device (100) for the machining apparatus as claimed in claim 2, wherein the driving mechanism (30) includes at least one intermediate gear (33); the teeth surface (431) of the follower (43) meshes with the intermediate gear (33); the at least one intermediate gear (33) meshes with the driven gear (34), wherein a tooth count of the at least one intermediate gear (33) is less than a tooth count of the driven gear (34).

4. The tool changing device (100) for the machining apparatus as claimed in claim 1, wherein the driving mechanism (30) includes a linear guide (42) and a sliding block (41); either the linear guide (42) and the sliding block (41) is fixedly connected to the mechanical base (10), while the other one of the linear guide (42) and the sliding block (41) is fixedly connected to the follower (43); the linear guide (42) and the sliding block (41) are operatively coupled with each other in a sliding pair manner.

5. The tool changing device (100) for the machining apparatus as claimed in claim 1, wherein the driving mechanism (30) includes a driving base (38) that is engaged with the mechanical base (10); the driving cam (39) is disposed on the driving base (38) in a rotatable manner; the tool changing device (100) includes a fine-tuning mean adapted to drive the driving base (38) to move along the first axis (L1).

6. The tool changing device (100) for the machining apparatus as claimed in claim 5, wherein the fine-tuning mean includes at least one adjustment link (60, 61) and the driving base (38) being operatively coupled with the mechanical base (10) in a sliding pair manner; the at least one adjustment link (60, 61) is driven to rotate and thereby drives the driving base (38) to move.

7. The tool changing device (100) for the machining apparatus as claimed in claim 6, wherein the driving base (38) has a plurality of long grooves (384a); the mechanical base (10) has a plurality of positioning holes (12a); a plurality of positioning pins (44) respectively passes through one of the plurality oflong grooves (384a) and correspondingly extends into one of the plurality of positioning holes (12a); the at least one adjustment link (60, 61) includes a first adjustment link (60) and a second adjustment link (61); the first adjustment link (60) is driven to rotate, thereby driving the driving base (38) to move in a first direction; the second adjustment link (61) is driven to rotate, thereby driving the driving base (38) to move in a second direction; the first direction is opposite to the second direction.

8. The tool changing device (100) for the machining apparatus as claimed in claim 1, wherein the driving mechanism (30) includes a driving base (38) and a motor (40); the driving base (38) is engaged with the mechanical base (10); the driving cam (39) is disposed on the driving base (38); the motor (40) is engaged with the driving base (38) and is adapted to drive the driving cam (39) to rotate; the tool changing device (100) includes an angle detection module (50), which is engaged with the driving base (38) and is adapted to detect a rotational angle of the driving cam (39).

9. The tool changing device (100) for the machining apparatus as claimed in claim 8, wherein the angle detection module (50) includes a magnet (51) and an angle sensor (52); the magnet (51) is provided on an end surface of the driving cam (39) and rotates along with the driving cam (39); the angle sensor (52) is fixed to the driving base (38) and detects a rotational angle of magnetic field lines of the magnet (51) in a non-contact manner and generates a signal; the signal controls the motor (40) to stop running.

10. The tool changing device (100) for the machining apparatus as claimed in claim 8, wherein the angle detection module (50) includes two angle detectors (55) provided on the driving base (38) and two sensed portions (56a) provided on the driving cam (39) and rotating along with the driving cam (39); each of the two angle detectors (55) detect one of the two sensed portions (56a) and generates a signal that controls the motor (40) to stop running.

11. The tool changing device (100) for the machining apparatus as claimed in claim 9 or claim 10, including two position sensors (58) provided on the driving base (38) and a sensed portion (48a) provided on the follower (43); each of the two position sensors (58) is electrically connected to the angle detection module (50); when the angle detection module (50) sends the signal, one of the two position sensors (58) detects the sensed portion (48a) on the follower (43) and generates a confirmation signal.

12. The tool changing device (100) for the machining apparatus as claimed in claim 1, including a positioning mean adapted to position the tool changing arm (20) at either the first position (P1) or the second position (P2).

13. The tool changing device (100) for the machining apparatus as claimed in claim 12, wherein the positioning mean includes a blocking surface (15a) provided on the mechanical base (10) and a first abutting portion (352) and a second abutting portion (353) that are provided on the rotating base (35); when the first abutting portion (352) is in contact with the blocking surface (15a), the tool changing arm (20) is positioned at the first position (P1); when the second abutting portion (353) is in contact with the blocking surface (15a), the tool changing arm (20) is positioned at the second position (P2).

## Patentansprüche

1. - Werkzeugwechselvorrichtung (100) für ein Bearbeitungsgerät, umfassend: eine mechanische Basis (10), die feststehend ist;
einen Antriebsmechanismus (30), der mit der mechanischen Basis (10) eingreift und einen Antriebsnocken (39), einen Mitnehmer (43), eine Welle (32) und eine drehende Basis (35) beinhaltet; wobei der Antriebsnocken (39) gesteuert wird, um um eine erste Achse (L1) zu drehen, wobei eine Oberfläche des Antriebsnocken (39) eine gekrümmte Nut (391) aufweist; der Mitnehmer (43) einen vorspringenden Abschnitt (432) aufweist, der in die gekrümmte Nut (391) passt; wenn der Antriebsnocken (39) dreht, sich der Mitnehmer (43) entlang der ersten Achse (L1) bewegt; die Welle (32) durch die mechanische Basis (10) verläuft und um eine zweite Achse (L2) drehbar ist; ein Abschnitt der Welle (32), der sich auf einer Innenseite der mechanischen Basis (10) befindet, funktionsfähig auf kämmende Weise mit dem Mitnehmer (43) gekoppelt ist; ein Abschnitt der Welle (32), der sich an einer Außenseite der mechanischen Basis (10) befindet, an der drehenden Basis (35) befestigt ist; und
einen Werkzeugwechselarm (20), der mit der drehenden Basis (35) verbunden und zwischen einer ersten Position (P1) und einer zweiten Position (P2) schwenkbar ist.

2. - Werkzeugwechselvorrichtung (100) für das Bearbeitungsgerät nach Anspruch 1, wobei der Antriebsmechanismus (30) ein angetriebenes Zahnrad (34) beinhaltet; das angetriebene Zahnrad (34) um die Welle (32) passt; der Mitnehmer (43) eine Zahnfläche (431) aufweist, die entlang der ersten Achse (L1) angeordnet ist; der Mitnehmer (43) über die Zahnfläche (431) des Mitnehmers (43) funktionsfähig auf kämmende Weise mit dem angetriebenen Zahnrad (34) gekoppelt ist; das angetriebene Zahnrad (34) die Welle (32) antreibt, um zu drehen.

3. - Werkzeugwechselvorrichtung (100) für das Bearbeitungsgerät nach Anspruch 2, wobei der Antriebsmechanismus (30) mindestens ein Zwischenzahnrad (33) beinhaltet; die Zahnfläche (431) des Mitnehmers (43) mit dem Zwischenzahnrad (33) kämmt; das mindestens eine Zwischenzahnrad (33) mit dem angetriebenen Zahnrad (34) kämmt, wobei eine Zahnanzahl des mindestens einen Zwischenzahnrads (33) kleiner ist als eine Zahnanzahl des angetriebenen Zahnrads (34).

4. - Werkzeugwechselvorrichtung (100) für das Bearbeitungsgerät nach Anspruch 1, wobei der Antriebsmechanismus (30) eine Linearführung (42) und einen Gleitblock (41) beinhaltet; eines von der Linearführung (42) und dem Gleitblock (41) fest mit der mechanischen Basis (10) verbunden ist, während das andere von der Linearführung (42) und dem Gleitblock (41) fest mit dem Mitnehmer (43) verbunden ist; die Linearführung (42) und der Gleitblock (41) als gleitendes Paar funktionsfähig miteinander gekoppelt sind.

5. - Werkzeugwechselvorrichtung (100) für das Bearbeitungsgerät nach Anspruch 1, wobei der Antriebsmechanismus (30) eine Antriebsbasis (38) beinhaltet, die mit der mechanischen Basis (10) eingreift; der Antriebsnocken (39) auf drehbare Weise auf der Antriebsbasis (38) angeordnet ist; die Werkzeugwechselvorrichtung (100) eine Feineinstellungseinrichtung beinhaltet, die angepasst ist, um die Antriebsbasis (38) anzutreiben, um sich entlang der ersten Achse (L1) zu bewegen.

6. - Werkzeugwechselvorrichtung (100) für das Bearbeitungsgerät nach Anspruch 5, wobei die Feineinstellungseinrichtung mindestens ein Einstellglied (60, 61) beinhaltet und die Antriebsbasis (38) als gleitendes Paar funktionsfähig mit der mechanischen Basis (10) gekoppelt ist; das mindestens eine Einstellglied (60, 61) angetrieben wird, um zu drehen und dadurch die Antriebsbasis (38) antreibt, um zu bewegen.

7. - Werkzeugwechselvorrichtung (100) für das Bearbeitungsgerät nach Anspruch 6, wobei die Antriebsbasis (38) eine Vielzahl von langen Nuten (384a) aufweist; die mechanische Basis (10) eine Vielzahl von Stelllöchern (12a) aufweist; eine Vielzahl von Stellstiften (44) jeweils durch eine der Vielzahl von langen Nuten (384a) verläuft und sich entsprechend in eines der Vielzahl von Stelllöchern (12a) erstreckt; das mindestens eine Einstellglied (60, 61) ein erstes Einstellglied (60) und ein zweites Einstellglied (61) beinhaltet; das erste Einstellglied (60) angetrieben wird, um zu drehen, wodurch die Antriebsbasis (38) angetrieben wird, um sich eine erste Richtung zu bewegen; das zweite Einstellglied (61) angetrieben wird, um zu drehen, wodurch die Antriebsbasis (38) angetrieben wird, um sich in eine zweite Richtung zu bewegen; die erste Richtung der zweiten Richtung entgegengesetzt ist.

8. - Werkzeugwechselvorrichtung (100) für das Bearbeitungsgerät nach Anspruch 1,wobei der Antriebsmechanismus (30) eine Antriebsbasis (38) und einen Motor (40) beinhaltet; die Antriebsbasis (38) mit der mechanischen Basis (10) eingreift; der Antriebsnocken (39) auf der Antriebsbasis (38) angeordnet ist; der Motor (40) mit der Antriebsbasis (38) eingreift und angepasst ist, um den Antriebsnocken (39) anzutreiben, um zu drehen; die Werkzeugwechselvorrichtung (100) ein Winkelerfassungsmodul (50) beinhaltet, das mit der Antriebsbasis (38) eingreift und angepasst ist, um einen Drehwinkel des Antriebsnockens (39) zu erfassen.

9. - Werkzeugwechselvorrichtung (100) für das Bearbeitungsgerät nach Anspruch 8, wobei das Winkelerfassungsmodul (50) einen Magneten (51) und einen Winkelsensor (52) beinhaltet; der Magnet (51) an einer Stirnfläche des Antriebsnockens (39) bereitgestellt ist und zusammen mit dem Antriebsnocken (39) dreht; der Winkelsensor (52) an der Antriebsbasis (38) befestigt ist und berührungslos einen Drehwinkel von Magnetfeldlinien des Magneten (51) erfasst und ein Signal erzeugt; das Signal den Motor (40) steuert, um nicht mehr zu laufen.

10. - Werkzeugwechselvorrichtung (100) für das Bearbeitungsgerät nach Anspruch 8, wobei das Winkelerfassungsmodul (50) zwei Winkeldetektoren (55), die an der Antriebsbasis (38) bereitgestellt sind, und zwei erfasste Abschnitte (56a), die an dem Antriebsnocken (39) bereitgestellt sind und zusammen mit dem Antriebsnocken (39) drehen, beinhaltet; jeder der zwei Winkeldetektoren (55) einen der zwei erfassten Abschnitte (56a) erfasst und ein Signal erzeugt, das den Motor (40) steuert, um nicht mehr zu laufen.

11. - Werkzeugwechselvorrichtung (100) für das Bearbeitungsgerät nach Anspruch 9 oder Anspruch 10, die zwei Stellsensoren (58), die an der Antriebsbasis (38) bereitgestellt sind, und einen abgetasteten Abschnitt (48a), der an dem Mitnehmer (43) bereitgestellt ist, beinhaltet; wobei jeder der zwei Stellsensoren (58) elektrisch mit dem Winkelerfassungsmodul (50) verbunden ist; wenn das Winkelerkennungsmodul (50) das Signal sendet, einer der zwei Stellsensoren (58) den abgetasteten Abschnitt (48a) an dem Mitnehmer (43) erfasst und ein Bestätigungssignal erzeugt.

12. - Werkzeugwechselvorrichtung (100) für das Bearbeitungsgerät nach Anspruch 1, die eine Stelleinrichtung beinhaltet, die angepasst ist, um den Werkzeugwechselarm (20) an einer von der ersten Position (P1) oder der zweiten Position (P2) zu positionieren.

13. - Werkzeugwechselvorrichtung (100) für das Bearbeitungsgerät nach Anspruch 12, wobei die Stelleinrichtung eine Blockierfläche (15a), die an der mechanischen Basis (10) bereitgestellt ist, und einen ersten Anschlagabschnitt (352) und einen zweiten Anschlagabschnitt (353), die an der drehenden Basis (35) bereitgestellt sind, beinhaltet; wenn der erste Anschlagabschnitt (352) in Kontakt mit der Blockierfläche (15a) ist, der Werkzeugwechselarm (20) in der ersten Position (P1) positioniert wird; wenn der zweite Anschlagabschnitt (353) in Kontakt mit der Blockierfläche (15a) ist, der Werkzeugwechselarm (20) in der zweiten Position (P2) positioniert wird.

## Revendications

1. - Dispositif de changement d'outil (100) pour une machine d'usinage, comprenant :
une base mécanique (10) qui est fixe ;
un mécanisme d'entraînement (30) engagé avec la base mécanique (10) et comprenant une came d'entraînement (39), un suiveur (43), un arbre (32) et une base rotative (35) ; la came d'entraînement (39) est commandée pour tourner autour d'un premier axe (L1), une surface de la came d'entraînement (39) ayant une rainure incurvée (391) ; le suiveur (43) présente une partie en saillie (432) s'adaptant dans la rainure incurvée (391) ; lorsque la came d'entraînement (39) tourne, le suiveur (43) se déplace le long du premier axe (L1) ; l'arbre (32) traverse la base mécanique (10) et est apte à tourner autour d'un second axe (L2) ; une partie de l'arbre (32) située sur un côté interne de la base mécanique (10) est couplée de manière fonctionnelle au suiveur (43) de manière à s'engrener ; une partie de l'arbre (32) située sur un côté externe de la base mécanique (10) est fixée à la base rotative (35) ; et
un bras de changement d'outil (20) relié à la base rotative (35) et apte à pivoter entre une première position (P1) et une seconde position (P2).

2. - Dispositif de changement d'outil (100) pour la machine d'usinage selon la revendication 1, dans lequel le mécanisme d'entraînement (30) comprend un engrenage entraîné (34) ; l'engrenage entraîné (34) s'adapte autour de l'arbre (32) ; le suiveur (43) a une surface dentée (431) disposée le long du premier axe (L1) ; le suiveur (43) est couplé de manière fonctionnelle à l'engrenage entraîné (34) par l'intermédiaire de la surface dentée (431) du suiveur (43) de manière à s'engrener ; l'engrenage entraîné (34) entraîne l'arbre (32) en rotation.

3. - Dispositif de changement d'outil (100) pour la machine d'usinage selon la revendication 2, dans lequel le mécanisme d'entraînement (30) comprend au moins un engrenage intermédiaire (33) ; la surface dentée (431) du suiveur (43) s'engrène avec l'engrenage intermédiaire (33) ; l'au moins un engrenage intermédiaire (33) s'engrène avec l'engrenage entraîné (34), un nombre de dents de l'au moins un engrenage intermédiaire (33) étant inférieur à un nombre de dents de l'engrenage entraîné (34).

4. - Dispositif de changement d'outil (100) pour la machine d'usinage selon la revendication 1, dans lequel le mécanisme d'entraînement (30) comprend un guide linéaire (42) et un bloc coulissant (41) ; l'un du guide linéaire (42) et du bloc coulissant (41) est relié de manière fixe à la base mécanique (10), tandis que l'autre du guide linéaire (42) et du bloc coulissant (41) est relié de manière fixe au suiveur (43) ; le guide linéaire (42) et le bloc coulissant (41) sont couplés de manière fonctionnelle l'un à l'autre de manière à former une paire coulissante.

5. - Dispositif de changement d'outil (100) pour la machine d'usinage selon la revendication 1, dans lequel le mécanisme d'entraînement (30) comprend une base d'entraînement (38) qui est engagée avec la base mécanique (10) ; la came d'entraînement (39) est disposée sur la base d'entraînement (38) de manière rotative ; le dispositif de changement d'outil (100) comprend un moyen de réglage fin apte à entraîner la base d'entraînement (38) à se déplacer le long du premier axe (L1).

6. - Dispositif de changement d'outil (100) pour la machine d'usinage selon la revendication 5, dans lequel le moyen de réglage fin comprend au moins une liaison de réglage (60, 61) et la base d'entraînement (38) étant couplée de manière fonctionnelle avec la base mécanique (10) de manière à former une paire coulissante ; la au moins une liaison de réglage (60, 61) est entraînée en rotation et entraîne ainsi la base d'entraînement (38) à se déplacer.

7. - Dispositif de changement d'outil (100) pour la machine d'usinage selon la revendication 6, dans lequel la base d'entraînement (38) comporte une pluralité de rainures longues (384a) ; la base mécanique (10) comporte une pluralité de trous de positionnement (12a) ; une pluralité de goupilles de positionnement (44) traversent respectivement l'une de la pluralité de rainures longues (384a) et s'étendent de manière correspondante dans l'un de la pluralité de trous de positionnement (12a) ; la au moins une liaison de réglage (60, 61) comprend une première liaison de réglage (60) et une seconde liaison de réglage (61) ; la première liaison de réglage (60) est entraînée en rotation, entraînant ainsi la base d'entraînement (38) à se déplacer dans une première direction ; la seconde liaison de réglage (61) est entraînée en rotation, entraînant ainsi la base d'entraînement (38) à se déplacer dans une seconde direction ; la première direction est opposée à la seconde direction.

8. - Dispositif de changement d'outil (100) pour la machine d'usinage selon la revendication 1, dans lequel le mécanisme d'entraînement (30) comprend une base d'entraînement (38) et un moteur (40) ; la base d'entraînement (38) est engagée avec la base mécanique (10) ; la came d'entraînement (39) est disposée sur la base d'entraînement (38) ; le moteur (40) est engagé avec la base d'entraînement (38) et est apte à entraîner la came d'entraînement (39) en rotation ; le dispositif de changement d'outil (100) comprend un module de détection d'angle (50), qui est engagé avec la base d'entraînement (38) et est apte à détecter un angle de rotation de la came d'entraînement (39).

9. - Dispositif de changement d'outil (100) pour la machine d'usinage selon la revendication 8, dans lequel le module de détection d'angle (50) comprend un aimant (51) et un capteur d'angle (52) ; l'aimant (51) est disposé sur une surface d'extrémité de la came d'entraînement (39) et tourne conjointement avec la came d'entraînement (39) ; le capteur d'angle (52) est fixé à la base d'entraînement (38) et détecte un angle de rotation de lignes de champ magnétique de l'aimant (51) d'une manière sans contact et génère un signal ; le signal commande au moteur (40) de s'arrêter.

10. - Dispositif de changement d'outil (100) pour la machine d'usinage selon la revendication 8, dans lequel le module de détection d'angle (50) comprend deux détecteurs d'angle (55) disposés sur la base d'entraînement (38) et deux parties détectées (56a) disposées sur la came d'entraînement (39) et tournant conjointement avec la came d'entraînement (39) ; chacun des deux détecteurs d'angle (55) détecte l'une des deux parties détectées (56a) et génère un signal qui commande au moteur (40) de s'arrêter.

11. - Dispositif de changement d'outil (100) pour la machine d'usinage selon la revendication 9 ou la revendication 10, comprenant deux capteurs de position (58) disposés sur la base d'entraînement (38) et une partie détectée (48a) disposée sur le suiveur (43) ; chacun des deux capteurs de position (58) est connecté électriquement au module de détection d'angle (50) ; lorsque le module de détection d'angle (50) envoie le signal, l'un des deux capteurs de position (58) détecte la partie détectée (48a) sur le suiveur (43) et génère un signal de confirmation.

12. - Dispositif de changement d'outil (100) pour la machine d'usinage selon la revendication 1, comprenant un moyen de positionnement apte à positionner le bras de changement d'outil (20) soit à la première position (P1), soit à la seconde position (P2).

13. - Dispositif de changement d'outil (100) pour la machine d'usinage selon la revendication 12, dans lequel le moyen de positionnement comprend une surface de blocage (15a) disposée sur la base mécanique (10) et une première partie de butée (352) et une seconde partie de butée (353) qui sont disposées sur la base rotative (35) ; lorsque la première partie de butée (352) est en contact avec la surface de blocage (15a), le bras de changement d'outil (20) est positionné à la première position (P1) ; lorsque la seconde partie de butée (353) est en contact avec la surface de blocage (15a), le bras de changement d'outil (20) est positionné à la seconde position (P2).
